# EUROPEAN PATENT SPECIFICATION

(11) **EP 1 655 351 B1**
(45) Date of publication and mention of the grant of the patent: **01.01.2020**
(21) Application number: 05256749.2
(22) Date of filing: 01.11.2005
(51) Int. Cl.: C09D 7/00, C09D 7/45, A01N 25/10

(54) **Aqueous compositions with poorly water soluble compounds**
Wässrige Zusammensetzungen mit schwerwasserlöslichen Verbindungen
Compositions aqueuses avec des composants peu solubles dans l'eau

(30) Priority: 08.11.2004 EP 04292641
(43) Date of publication of application: 10.05.2006
(73) Proprietor: Rohm and Haas Company, Philadelphia, PA 19106-2399 (US)
(72) Inventor: Reeve, Paul Francis David, Grasse 06130 (FR); Santos, Daniele Cristina Almeida Hummel Pimenta, Sao Oaulo, Jacerei 2300000 (BR)
(74) Representative: Kent, Venetia Katherine

(56) References cited:
- EP-A- 0 262 465
- EP-A- 0 460 896
- EP-A- 0 875 557
- WO-A-92/01377
- WO-A-99/43205
- US-A- 4 351 754
- US-A- 4 663 364
- US-A- 5 206 021
- US-A- 5 478 602
- US-B1- 6 649 190

## Description

### BACKGROUND:

The useful properties of many aqueous formulations can be improved by incorporating certain desirable compounds into those aqueous formulations. However, such incorporation is sometimes difficult when the desirable compounds are insoluble or slightly soluble in water. One method of addressing this difficulty is to make compositions that include, possibly among other ingredients, water; a desirable compound that is insoluble or slightly soluble in water; and an additional ingredient that acts as a thickener, as a suspending agent, or as both a thickener and a suspending agent. For example, US 6,664,213 discloses liquid pesticide compositions that may be aqueous suspensions and that may include thickener. It is desired to provide improved compositions that contain relatively high concentrations of one or more compounds that are insoluble or slightly soluble in water. It is also desired that such improved compositions have relatively high density and have relatively good stability.

WO 99/43205 discloses a water-based gel-type disinfectants composition comprising one or more biocides, noughts to 30% of an alcohol, a thickening agent, and the emulsifier underwater. The thickening agent may be selected from acrylic acid copolymers, methacrylic acid copolymers and cellulose derivatives.

US-A-5 206 021 discloses pesticide emulsions of oil in water. The emulsions may be stabilised by a solid dispersing agent, such as titanium dioxide.

US-A-4 663 364 discloses a biocidal powder having a biological effect comprising 50% by weight of particles having a diameter of 0.5 µm or less, the composition further comprising a dispersing agent such as a polymer of styrene sulphonate.

### STATEMENT OF THE INVENTION:

The present invention in its various aspects is as set out in the appended claims.

In a first aspect of the present invention, there is provided an aqueous composition comprising
(a) 10% to 80% at least one poorly water soluble biocide by solids weight, based on the total weight of said aqueous composition,
(b) 0.1 % to 30% at least one pH-sensitive dispersed polymer, by solids weight, based on the total weight of said aqueous composition, and
(c) 0% to 10% pH-insensitive polymer, by solids weight, based on the total weight of said aqueous composition,
wherein said pH-sensitive dispersed polymer is a polymer with weight-average molecular weight of 500,000 or greater, or is a crosslinked polymer, or is a mixture thereof.

In a second aspect of the present invention, there is provided a method of preparing an aqueous composition, comprising the step of preparing a mixture by mixing ingredients comprising
(a) 10% to 80% at least one poorly water soluble biocide by solids weight, based on the total weight of said aqueous composition,
(b) 0.1% to 30% at least one pH-sensitive dispersed polymer, by solids weight, based on the total weight of said aqueous composition, and wherein the Brookfield viscosity of said mixture is less than 1.0 Pa*s using a Brookfield LV viscometer at 60 rpm and spindle 1 or 2. Further aspects of the invention are set out in the dependent claims.

### DETAILED DESCRIPTION:

As used herein "(meth)acrylic" means acrylic or methacrylic, and "(meth)acrylate" means acrylate or methacrylate.

One property of compounds is solubility in water. Some compounds are insoluble in water, which means herein that when the compound in question is mixed with water at 25°C, no detectable amount of the compound in question dissolves in the water. Some compounds are slightly soluble in water, which means herein that when the compound in question is mixed with water at 25°C, 10 grams or less of the compound in question dissolves per liter of water. As used herein, "poorly water soluble" will mean any compound that is either insoluble in water or is slightly soluble in water. As used herein, "water soluble" will mean any compound that dissolves in water in the amount of more that 10 grams of compound per liter of water.

As used herein a "biocide" is a compound capable of inhibiting the growth or controlling the growth of microorganisms at a locus. Biocides include, for example, bactericides, bacteristats, fungicides, fungistats, algaecides, and algistats, depending on the dose level applied, the system conditions, and the level of microorganism control desired. The term "microorganism" includes, for example, fungi (such as, for example, yeast and mold), bacteria, and algae. The term "locus" refers to a useful system or product subject to contamination by microorganisms.

Some compounds useful as biocides include, for example, triazines (such as, for example, Terbutryn), substituted and un-substituted alkyl isothiazolinones, and p-hydroxy benzoate ester ("paraben") compounds. Some examples of alkyl isothiazolinones are methyl isothiazolinone, octyl isothiazolinone, dichloromethyl isothiazolinone, benzo isothiazolinone, other alkyl isothiazolinones, and substituted versions thereof. Some examples of parabens are alkyl parabens (such as, for example, methyl paraben, ethyl paraben, propyl paraben, and butyl paraben) and aryl parabens (such as, for example, benzyl paraben). Compounds useful as biocides include, for example, di-bromo nitrile propionamide (DBNPA), 2-bromo-2-nitro-propane-1,3-diol, formaldehyde, quaternary compounds, carbendazim, diuron, iodo-propargyl butyl carbamates (IPBC), zinc pyrithione, N'-*tert*-butyl-N-cycloproply-6-(methylthio)-1,3,5-triazine-2,4-diamine, terbutrine, and. Also useful as biocides are, for example, methyl hemiacetal, phenoxyethanol, clorothalonyl, 3-(4-chlorophenyl)-1-(3,4-dichlorphenyl)urea (triclorocarban), 2,4,4'-Trichloro-2'-hydroxydiphenyl ether (triclosan), piroctone olamine, dimethylol dimethylhydantoin (DMDMH), oxybisphenoxarsine (OBPA), thiocyanomethyl-thiobenzothiazole (TCMTB), and dithio-2-2'bis(benzmethylamide), hexetidine, chlorophenesin, and silver chloride salts.

As used herein, and as defined by F.W. Billmeyer, in Textbook of Polymer Science, second edition, published by Wiley-Interscience, 1971, a "polymer" is a large molecule built up by the repetition of smaller, simpler chemical units. "Monomers" are chemicals that react with each other to become the repeated units of a polymer. The repeated unit in the polymer is known as the "residue" of the monomer that formed that repeat unit. Polymers may be linear, branched, crosslinked, star shaped, or any combination or mixture thereof. Polymers may be homopolymers (i.e., built up from one type of monomer) or copolymers (built up from two or more types of monomer). Copolymers may have the monomer units arranged randomly, in blocks, in sequence, or any combination thereof. Polymers have weight-average molecular weight of 1,000 or higher; or 10,000 or higher. Crosslinked polymers have molecular weight that is generally considered to be effectively infinite.

Polymers may have any of a wide variety of compositions. One class of polymers is "acrylic polymers." As used herein an acrylic polymer is a polymer that has 50% or more by weight residues of (meth)acrylic monomers, based on the weight of the polymer. A (meth)acrylic monomer is any monomer that is (meth)acrylic acid, any ester thereof, or any amide thereof. Esters or amides of (meth)acrylic acid may have alkyl groups, aromatic groups, any of a wide variety of substituent groups (such as, for example, hydroxyl, epoxide, amine, thiol, urethane, carboxyl, or other substituent groups), or any combination thereof. Some (meth)acrylic monomers have exactly one carbon-carbon double bond, while other (meth)acrylic monomers have two or more carbon-carbon double bonds. Some acrylic polymers have 75% or more by weight residues of (meth)acrylic monomers, and some have 95% or more by weight residues of (meth)acrylic monomers.

Some monomers are described herein as esters of (meth)acrylic acid with certain alcohols. It is to be understood that such a description refers to the structure of the monomer so described, which may be made by any method, including by reacting (meth)acrylic acid with that certain alcohol or by another method.

Independent of composition, polymers may have any of a wide variety of physical forms, and some polymers may be converted from one physical form to another. Some polymers are solid, liquid, or a combination thereof. Some polymers are dissolved in solvent to form a solution. Some polymers are dispersed: that is, they exist as polymeric particles distributed in a liquid medium.

The practice of the present invention involves the use of one or more polymer dispersed in an aqueous medium (herein called an "aqueous-dispersed polymer").. In some embodiments, suitable aqueous-dispersed polymers are made by polymerization process that makes the polymer in the form of aqueous-dispersed polymer, such as, for example, aqueous emulsion polymerization or aqueous suspension polymerization. In some embodiments, polymers are used that may be polymerized by any method, that exist in some form other than aqueous-dispersed form (such as, for example, in the form of a dispersion in a medium other than an aqueous medium, in solution form, or in solid form) and that are then converted to aqueous-dispersed form.

As used herein, a composition is "aqueous" if the composition includes a continuous medium (herein called an "aqueous medium") that is 50% or more water, by weight, based on the weight of the continuous medium. Some aqueous media are 75% or more, or 90% or more, water by weight, based on the weight of the continuous medium. Ingredients other than water may be dissolved in the aqueous medium, dispersed in the aqueous medium, or any combination thereof.

As used herein, the "solids" of a solution or dispersion means the materials remaining from the solution or dispersion after the volatile materials have been removed. Volatile materials are those with boiling point at 1 atmosphere pressure of 150°C or lower. As used herein, the "solids weight" of a specific material in a solution or dispersion means the weight of that specific material in the solids of that solution or dispersion.

A useful characteristic of a fluid composition is its viscosity. Viscosity is usefully measured by Brookfield viscosity, which is described in Test Method A of ASTM D 2196-99 (American Society of Testing and Materials, West Conshohocken, PA, USA). As described therein, the conditions of measuring viscosity (e.g., the model of viscometer, the spindle, and the rotation speed) are chosen to give scale reading in the middle or upper portion of the scale.

The practice of the present invention involves the use of at least one polymer that is "pH-sensitive," which is defined herein as a polymer that passes the following pH sensitivity test. To perform the pH sensitivity test, an aqueous dispersion is prepared that contains 1% by solids weight of the polymer being tested, based on the total weight of the aqueous dispersion. The viscosity of that aqueous dispersion is measured. An acidic or basic compound is added to that aqueous dispersion to change the pH, without causing other chemical changes such as, for example, changes that involve formation or breaking of one or more covalent bonds, including, for example, such changes as polymerization and polymer degradation. If any such change in pH can be found that results in a change in the viscosity of the aqueous dispersion by a factor of 5 or greater, the polymer is said herein to be "pH-sensitive." Any polymer that is not pH-sensitive is known herein as "pH-insensitive."

According to the invention, the pH-sensistive dispersed polymer is a polymer with weight-average molecular weight of 500,000 or greater, or is a crosslinked polymer, or is a mixture thereof.

Independent of molecular weight and crosslinking, some examples of suitable pH-sensitive polymers are acrylic latex polymers that contain residues of one or more carboxyl containing monomers, possibly also containing residues of other monomers, and that are polymerized and stored at relatively low pH (e.g., pH of 2 to 4). When a dispersion of 1% solids of such a latex is prepared, and the pH is raised to 7 or above, the viscosity of the dispersion increases by a factor of 5 or greater. Some of such acrylic latex polymers are known as "alkali soluble emulsions," and some are known as "alkali swellable emulsions." The abbreviation "ASE" is defined herein to mean any polymer that is either an alkali soluble emulsion, and alkali swellable emulsion, or a mixture or combination thereof.

Some suitable ASEs contain residue of one or more hydrophobic (meth)acrylic monomers. As used herein, a hydrophobic (meth)acrylic monomer is an ester of (meth)acrylic acid with an alcohol of the formula ROH, where R contains a hydrophobic group, such as, for example, a hydrocarbon group of 8 or more adjacent carbon atoms. R may be linear, branched, or cyclic; alkyl, alkenyl, or alkynyl; substituted or unsubstituted; or any combination thereof. In some suitable ROH alcohols, R- has the structure A-Q-, where group A contains the hydrophobic group, which may be substituted or unsubstituted, and where -Q- is -(-(CH₂)ₙ-O-)ₘ- where n is 2 or 3, and m is 1 to 100. Group A may or may not contain other groups in addition to the hydrophobic group An ASE that contains one or more residues of one or more hydrophobic monomers is known herein as a hydrophobically modified ASE, abbreviated herein "HASE." Some suitable HASEs have 0.5% or more, or 1% or more, residue of one or more hydrophobic monomers, by total weight of all hydrophobic monomers, based on the solids weight of the HASE. Some suitable HASEs have 30% or less, or 20% or less, residue of one or more hydrophobic monomers, by total weight of all hydrophobic monomers, based on the solids weight of the HASE.

Some suitable ASEs, herein called "NH-ASEs," have either very small amounts of residues of hydrophobic monomers or no residues of hydrophobic monomers. An NH-ASE will include 0% to 0.1% by weight of residues of one or more hydrophobic monomers based on the weight the solid NH-ASE. Some suitable NH-ASEs contain 0.01% or less of residues of hydrophobic monomers based on the weight of the solid ASE.

Among suitable ASEs, some have residues of one or more carboxylic acid containing monomers, such as, for example, acrylic acid, methacrylic acid, and mixtures thereof. Among such ASEs, some have an amount of residues of carboxylic acid containing monomers that is 5% or more, based on total weight of the solid ASE. Some suitable ASEs have 10% or more residues of carboxylic acid containing monomer, based on total weight of the solid ASE. Some ASEs also comprise 0.05% to 5% residues of one or more polyethylenically unsaturated monomers, by weight, based on total weight of the solid ASE, and these ASEs are said to be "crosslinked." Also contemplated for use in the present invention are "non-crosslinked" ASEs, which are ASEs that contain residues of one or more polyethylenically unsaturated monomers, by weight, based on total weight of the solid ASE in the amount of 0% to 0.049%; or 0% to 0.01%; or 0%.

An ASE is an aqueous dispersed polymer, which means that it is in the form of polymer particles dispersed in an aqueous medium. The preferred particle size of the polymer particles is from 0.05 to 1 micron, as measured by BI-90 Particle Sizer, supplied by Brookhaven Instruments Corporation. One suitable method of producing an ASE for use in the present invention is by aqueous emulsion polymerization.

Some suitable ASEs are 50% to 80% water by weight, based on the total weight of the ASE emulsion (i.e., the total weight of the solid ASE, the aqueous medium, and any other materials dissolved or dispersed in the aqueous medium), 10% to 50% solid polymer by weight, based on the total weight of the ASE emulsion, and 0% to 10% other ingredients (for example surfactants or emulsifiers), based on the total weight of the ASE emulsion. To keep the viscosity of the ASE emulsion low, the pH is normally kept low. The present invention may be practiced with any ASE emulsion kept at pH low enough to maintain its viscosity low enough for convenient blending with the other ingredients. The pH of a typical commercial ASE emulsion is around 2 to 5.

Some suitable ASEs are produced by emulsion polymerization, are crosslinked, have polymer solids between 20% and 40% by weight based on the total weight of the emulsion, and have pH of between 2 and 4.

For another example, some suitable pH-sensitive polymers show viscosity increase when pH is lowered. For example, some contemplated suitable pH-sensitive polymers are dispersed polymers that contain residues of substituted monomers, where the substituent group on the monomer is a base group such as, for example, an amine group. It is contemplated that, when a dispersion of 1% solids of one of such dispersed polymers is prepared, and the pH is lowered to 6 or below, the viscosity of the dispersion increases by a factor of 5 or more. Also contemplated are versions of such polymers analogous to the versions of the ASEs discussed above; i.e., dispersed polymers that are crosslinked and dispersed polymers that are uncrosslinked; dispersed polymers that include residues of hydrophobic monomers and dispersed polymers that do not include residues of hydrophobic monomers; and combinations and mixtures thereof.

In some embodiments, the aqueous composition of the present invention includes pH-sensitive dispersed polymer in an amount, by solids weight, based on the total weight of the aqueous composition, of 0.1% or more; or 0.2% or more; or 0.5% or more; or 1.0% or more. Independently, in some embodiments, the aqueous composition of the present invention includes pH-sensitive dispersed polymer in an amount, by solids weight, based on the total weight of the aqueous composition, of 30% or less; or 20% or less; or 10% or less; or 8% or less; or 5% or less.

Some non limiting examples of suitable commercially available pH-sensitive dispersed polymer are Aculyn™ 33, Aculyn™ 22, Aculyn™ 28, Acusol 810A, Acusol™ 820, Acusol™ 823, Acusol™ 830, and Acusol™ 842 (Rohm and Haas Company); Aristoflex™ AVC and Aristoflex™ HMB (Clariant); Novemer™ EC-1, Carbopol™ Aqua SF-1, Carbopol™Aqua XL-30, Fixate Plus, Carbopol™ Ultrez 21, and Carbopol™ ETD 2020, 934, 940, 941, 980, and 981 (Noveon); Tinovis™ GTC, Salcare™ SC 80 and SC 81 (Ciba Specialty Chemicals); Structure™ 2001, Structure™ 3001, and Structure™ Plus (National Starch); Stabylen 30, Synthalen™ K, L, and M, PNC 400, PNC 410, PNC 430, PNC 30, and Synthalen™ W2000, (3V Sigma); Simulgel™ A, EG, EPG, and NS, Sepigel™ 305, 501, and 600 (Seppic); Rapithix™ A-60 and A-100 (ISP), and Luvigel™ EM (BASF); and Rheolate™ 5000 (Rheox).

The practice of the present invention involves the use of at least one poorly water soluble compound. In some embodiments, at least one poorly water soluble compound contributes at least one of any of a wide variety of useful properties to a formulation. Some suitable poorly water soluble compounds, for example, have one or more forms of biological activity. Biological activity may be any function that affects the health or growth of one or more living organisms. Some suitable biologically active compounds are, for example, agricultural chemicals, pharmacological chemicals, and biocides. In some embodiments, at least one poorly water soluble compound is included that is useful as a biocide. Some suitable poorly water soluble compounds contribute useful properties other than biological activity, such as, for example, catalysis. Poorly soluble water compounds useful as catalysts include, for example, metals such as, for example, nickel. Some suitable poorly water soluble compounds contribute more than one useful property.

Independently, some suitable poorly water soluble compounds are organic, some are inorganic, and some are mixtures or complexes of organic and inorganic moieties. Independently, some suitable poorly water soluble compounds are polymers, and some are not polymers. Independently, at 25°C, some suitable poorly water soluble compounds are solid, some are liquid, some are gas, and some are mixtures of two or more phases.

In some embodiments, one or more of the poorly water soluble compounds used in the present invention has water solubility of 5 grams per liter of water or less at 25°C. In some embodiments, all of the poorly water soluble compounds used in the present invention have water solubility of 5 gram per liter of water or less at 25°C.

The amount of poorly water soluble compound in the composition of the present invention is 10% or more by solids weight, based on the total weight of the composition of the present invention. In some embodiments, the amount of poorly water soluble compound is 20% or more by solids weight, based on the total weight of the composition of the present invention. Independently the amount of poorly water soluble compound in the composition of the present invention is 80% or less by solids weight, based on the total weight of the composition of the present invention. In some embodiments, the amount of poorly water soluble compound is 75% or less, or 50% or less by solids weight, based on the total weight of the composition of the present invention.

In some embodiments, the composition of the present invention includes no poorly water soluble compound that lacks biological activity. In some embodiments, the composition of the present invention includes 5% or less poorly water soluble compound that lacks biological activity, by total solids weight of all poorly water soluble compounds that lack biological activity, based on the total weight of the aqueous composition of the present invention. In some embodiments, the amount of poorly water soluble compound that lacks biological activity is 2% or less; or 0.5% or less; or 0.1% or less, by total solids weight of all poorly water soluble compounds that lack biological activity, based on the total weight of the aqueous composition of the present invention.

In some embodiments, the composition of the present invention includes no poorly water soluble compound that is not a biocide. In some embodiments, the composition of the present invention includes 5% or less poorly water soluble compound that is not a biocide, by total solids weight of all poorly water soluble compounds that are not biocides, based on the total weight of the aqueous composition of the present invention. In some embodiments, the amount of poorly water soluble compound that is not a biocide is 2% or less; or 0.5% or less; or 0.1% or less, by total solids weight of all poorly water soluble compounds that are not biocides, based on the total weight of the aqueous composition of the present invention.

In some embodiments, a poorly water soluble compound will be dispersed in an aqueous medium. Among such embodiments, if a poorly water soluble compound is a liquid, it may be dispersed as droplets; if a poorly water soluble compound is a solid, it may be divided into particles, which may be dispersed in an aqueous medium. In some embodiments involving a poorly water soluble solid compound that is divided into particles, the particles of poorly water soluble compound pass through a screen of 325 mesh (i.e., less than 5% by weight of the poorly water soluble compound is particles of diameter 44 micrometer or larger).

Compositions of the present invention contain little or no pH-insensitive polymer. In some embodiments, the composition of the present invention contains no pH-insensitive polymer. In some embodiments, the composition of the present invention contains pH-insensitive polymer in an amount, by solid weight of pH-insensitive polymer, based on total weight of the composition, of 10% or less; or 3% or less; or 1% or less; or 0.3% or less; or 0.1% or less.

Some non-limiting examples of pH-insensitive polymers are polysaccharides (including, for example, gums carrageenan, alginates, and xanthan gum), cellulose ethers, cellulose gum, hydrophobically modified celluloses, and guar gums. Further non-limiting examples of pH-insensitive polymers are pH-insensitive synthetic polymers such as, for example, pH-insensitive polymers that are acrylic polymers, polyolefins, polystyrene and polystyrene copolymers, poly(vinyl chloride) and related copolymers, poly(vinyl acetate) and related copolymers, polyethers, polyamides, polyesters, polyurethanes, silicone polymers, epoxide polymers, polydienes, other synthetic polymers, substituted versions thereof, copolymers thereof, and mixtures thereof.

In addition to at least one poorly water soluble compound and at least one pH-sensitive dispersed polymer, compositions of the present invention optionally contain one or more further ingredients. Some examples of suitable further ingredients are additional surfactants (i.e., surfactants in addition to surfactant, if any, that was used in making the one or more polymers in the aqueous composition), dispersants, water-soluble polymer, additional water soluble compounds (i.e., water soluble compounds that are not polymers, surfactants, or dispersants), antifoam compounds, and other useful compounds.

Suitable surfactants include, for example, anionic surfactants, cationic surfactants, nonionic surfactants, amphoteric surfactants, and mixtures thereof. Some suitable anionic surfactants are, for example, alkylbenzene sulfonates, fatty alcohol sulfates, alkyl ether sulfates, alkane sulfonates, olefin sulfonates, sulfo fatty acid esters, internal sulfo fatty acid esters, fatty acid cyanamides, sulfo succinic acid alkyl esters, acyl oxyalkane sulfonates, acylamino alkane sulfonates, ether sulfonates, ether carboxylic acids, sacosinates alkyl phosphates, and alkyl ether phosphates. Some suitable nonionic surfactants are, for example, polyglycol ethers (such as, for example, fatty alcohol polyglycol ethers, alkylphenol polyglycol ethers, end group-capped fatty alcohol polyglycol ethers, fatty acid polyglycol esters, fatty acid alkanol amides, fatty acid alkanolamido polyglycol ethers, and ethylene oxide/propylene oxide block polymers), polyol surfactants (such as, for example, glycerine fatty acid esters, sorbitan esters, and sugar derived surfactants), and amine oxides.

In some compositions of the present invention, no additional surfactant is included. Some compositions of the present invention contain less than 0.1% additional surfactant, or less than 0.02% additional surfactant, by total solids weight of all additional surfactants, based on the total weight of the aqueous composition.

Among embodiments in which one or more additional surfactants are contained in the aqueous composition, some embodiments contain one or more anionic surfactants; some embodiments contain one or more nonionic surfactants; and some embodiments contain one or more anionic surfactants and one or more nonionic surfactants. In some embodiments, the amount of additional surfactant is 0.2% or higher, by total solids weight of all additional surfactants, based on the total weight of the aqueous composition. In some embodiments, the amount of additional surfactant is 0.5% or higher, or 1% or higher, or 2% or higher, by total solids weight of all additional surfactants, based on the total weight of the aqueous composition. In some embodiments, the amount of additional surfactant is 15% or lower, or 10% or lower, or 7% or lower, by total solids weight of all additional surfactants, based on the total weight of the aqueous composition.

Among those embodiments in which an aqueous composition of the present invention contains one or more dispersants, suitable dispersants include, for example, polyelectrolytes that are soluble in water. Some suitable dispersants are, for example, polycarbonates, polysulfonates, polyphosphates, ligninsulfonates, and condensation products of aromatic sulfonic acid with formaldehyde. Further examples of suitable dispersants include protein condensation products and water soluble polymers (such as, for example, poly(vinyl alcohol), poly(vinyl pyrrolidone), poly(vinyl sulfates), polyacrylates, polyacrylamide, maleic acid-olefin copolymers, and maleic acid-styrene copolymers. Mixtures of suitable dispersants are also suitable.

Among those embodiments in which an aqueous composition of the present invention contains one or more additional water soluble compounds, suitable additional water soluble compounds include, for example, one or more water soluble compounds that have biological activity, as defined herein above. Also suitable are water soluble compounds that are biocides. In some embodiments, the amount of additional water soluble compound is 0.2% or more, or 0.5% or more, or 0.7% or more, by total weight of all additional water soluble compounds, based on the total weight of the aqueous composition. In some embodiments, the amount of additional water soluble compound is 10% or less, or 5% or less, by total weight of all additional water soluble compounds, based on the total weight of the aqueous composition.

In some embodiments, less than 0.2% additional water soluble compound that does not have biological activity is included in the aqueous composition, by total solids weight of all additional water soluble compounds that do not have biological activity, based on the total weight of the aqueous composition. In some embodiments, less than 0.01% additional water soluble compound that is not a biocide is included in the aqueous composition, by total solids weight of all additional water soluble compounds that are not biocides, based on the total weight of the aqueous composition.

In the practice of the present invention, an aqueous composition is made that contains, optionally among other ingredients, one or more poorly water soluble compound and one or more pH-sensitive dispersed polymer. The ingredients may be mixed in any order, using any suitable container and method of mixing.

For example, in some embodiments, one or more poorly water soluble compound (either a solid in powder form or a liquid or a mixture thereof) may be dispersed in water, possibly with vigorous mixing to distribute the one or more poorly water soluble compound, and then one or more pH-sensitive dispersed polymers is added to the dispersion of one or more poorly water soluble compounds.

For another example, one or more pH-sensitive dispersed polymers may be added to water, and then one or more poorly water soluble compound (either liquid or solid powder or mixture thereof) may be added to the dilute dispersion of pH-sensitive dispersed polymer, optionally with vigorous mixing to help distribute the poorly water soluble compound.

In some embodiments, the aqueous composition of the present invention is made under pH conditions in which the pH-sensitive dispersed polymer is in its low-viscosity state. That is, the pH condition of the aqueous composition is such that any pH-sensitive dispersed polymers in the formulation are not exhibiting the viscosity increase that characterizes them as pH-sensitive. Such a pH condition is known herein as "a low-v pH." For example, in some of such embodiments, the aqueous composition of the present invention includes one or more ASEs, and the aqueous composition is prepared at low pH, so that the ASEs do not exhibit their pH-sensitive increases in viscosity.

Some compositions of the present invention that are at low-v pH have Brookfield viscosity (using Brookfield LV viscometer, at 60 rpm) of less than 1,000 mPa*s; or less than 500 mPa*s; or less than 200 mPa*s. It is contemplated that, when measuring the Brookfield viscosity of compositions of the present invention that are at low-v pH, the spindle used will be chosen to give a reading in the top half of the scale of the viscometer. It is contemplated that, sometimes, none of the normal spindles give such a reading, and then the normal spindle that gives the largest reading is chosen. In some cases, the correct spindle to use when measuring the Brookfield viscosity of compositions of the present invention that are at low-v pH, is spindle #1 or spindle #2.

It is contemplated that making compositions of the present invention at low-v pH can have several benefits. For example, the mixing requires less energy than performing the mixing at conditions of high viscosity. Thus, the aqueous composition may be formed and, optionally, further ingredients may be added, more easily at low viscosity than at high viscosity. For another example, vigorous mixing sometimes causes air bubbles to be trapped in the aqueous composition, and high viscosity compositions will undesirably trap the air bubbles in the compositions, while low viscosity compositions will allow air bubbles to escape more readily.

Among embodiments of the present invention in which the aqueous composition is prepared at low-v pH, in some embodiments (known herein as "viscosity-increase embodiments") the pH is then changed to cause the viscosity increase resulting from the pH-sensitivity of the pH-sensitive dispersed polymer. For example, an aqueous composition of the present invention containing one or more ASEs could be made at low pH, and then a basic compound could be added until the viscosity rises.

In some viscosity-increase embodiments, one or more of the poorly water soluble compounds is present in the aqueous composition in dispersed form, and some dispersed forms of poorly water soluble compounds are known to be unstable. Such instability may be that the poorly water soluble compound may tend to settle to the bottom of the container, that the composition may show phase separation ("syneresis") of clear fluid, that the color may change, that the poorly soluble water compound may chemically degrade, or any combination thereof. The high viscosity in such embodiments can sometimes prevent or postpone one or more symptoms of instability. Therefore, some viscosity-increase embodiments involving dispersed forms of poorly water soluble compound will have all the benefits of embodiments in which the aqueous composition is prepared at low-v pH plus the benefit of improving stability of the aqueous composition after the viscosity increase.

The practitioner of the present invention can obtain further benefits by taking advantage of the improved stability of aqueous compositions of viscosity-increase embodiments of the present invention. For example, the improved stability can, in some cases, allow the practitioner to obtain stable aqueous compositions using a poorly water soluble compound that is a solid in powder form with relatively large particle size. That is, using previous methods, if a poorly water soluble compound existed as a solid in powder form with relatively large particles, in order to obtain a stable composition with the powder distributed through an aqueous medium, it was often necessary to mechanically reduce the particle size of the powder (for example, by milling or grinding) prior to adding the powder to an aqueous composition. Milling, grinding, and other methods of reducing particle size are sometimes undesirable because they add complexity (and hence increased cost) to a process, and because they sometimes cause unwanted chemical change in the poorly water soluble compound. The viscosity-increase embodiments of the present invention sometimes allow the practitioner to obtain stable aqueous compositions with larger particles than previously possible, thus avoiding the need for milling or grinding.

In some viscosity-increase embodiments, the aqueous composition, after the pH is changed, will have Brookfield viscosity (using Brookfield LV viscometer, spindle # 4, at 60 rpm) of 1,000 mPa*s or higher; or 2,000 mPa*s or higher; or 4,000 mPa*s higher. In some viscosity-increase embodiments, the aqueous composition, after the pH is changed, will have Brookfield viscosity of 100,000 mPa*s or lower; or 20,000 mPa*s or lower; or 10,000 mPa*s lower.

Among viscosity-increase embodiments in which the aqueous composition includes one or more pH-sensitive polymers that increases viscosity when pH is lowered, an acidic compound will be added to the aqueous composition to lower pH. Suitable acidic compounds include, for example, inorganic acids, organic acids, and mixtures thereof. The acidic compound may or may not be diluted before addition to the aqueous composition. In some embodiments, the amount of acidic compound will be chosen to be sufficient to effect the viscosity change in the pH-sensitive dispersed polymer. In some embodiments, the amount of acidic compound will be 0.2% to 5% by solids weight based on the total weight of the aqueous composition.

Among viscosity-increase embodiments in which the aqueous composition includes one or more pH-sensitive polymers that increases viscosity when pH is raised, a basic compound will be added to the aqueous composition to raise pH. Suitable basic compounds include, for example, inorganic bases, organic bases, and mixtures thereof. Suitable bases include, for example, alkali metal hydroxides (including, for example, sodium hydroxide and potassium hydroxide), ammonia, amines, aqueous solutions thereof, and mixtures thereof. The basic compound may or may not be diluted before addition to the aqueous composition. In some embodiments, the amount of basic compound will be chosen to be sufficient to effect the viscosity change in the pH-sensitive dispersed polymer. In some embodiments, the amount of basic compound will be 0.2% to 5% by solids weight based on the total weight of the aqueous composition. Some suitable basic compounds are, for example, aminomethylpropanol and sodium hydroxide. In some embodiments, basic compound is added as a solution in water of concentration of 5% to 20% solids weight of basic compound, based on total weight of the solution.

Two useful characteristics of a composition are its viscosity at a shear rate of 10⁻⁵ sec⁻¹ and its viscosity at a shear rate of 10 sec⁻¹. These viscosities can be measured using, for example, a controlled stress rheometer, with concentric-cylinder geometry.

In some viscosity-increase embodiments, the aqueous composition, after the increase in viscosity, has viscosity at 10⁻⁵ sec⁻¹ of 1,000 Pa*s or higher, or 10,000 Pa*s or higher. Independently, in some viscosity-increase embodiments, the aqueous composition, after the increase in viscosity, has viscosity at 10 sec⁻¹ of 25 Pa*s or lower, or 15 Pa*s or lower, or 10 Pa*s or lower.

Among the viscosity-increase embodiments, there are some embodiments (herein called "viscosity dip" embodiments), with which an additional benefit is obtained. In the practice of a viscosity dip embodiment, first, an aqueous composition is prepared that contains a poorly water soluble compound in powder form that is distributed in an aqueous medium and that also contains a pH-sensitive dispersed polymer, under pH conditions such that the viscosity increase due to the pH-sensitive dispersed polymer has not occurred. Then, the acidic or basic compound that will cause the increase in viscosity is added in relatively small increments. If the choice of ingredients and amounts has been made correctly, the addition of a small amount of the acidic or basic compound will cause the viscosity of the aqueous composition to decrease; then addition of further acidic or basic compound will cause the viscosity to increase.

One example of a viscosity dip embodiment involves an aqueous composition including a poorly soluble biocide in powder form (distributed in the aqueous medium, at 30% solid biocide, based on the total weight of the aqueous composition) and an ASE (at 1% solid ASE, based on the total weight of the aqueous composition), at pH below 5. In this example, it is known from previous experience the minimum amount (herein called "A0") of sodium hydroxide solution in water (10% sodium hydroxide solids based on the weight of the sodium hydroxide solution) that is needed to cause the full increase in viscosity of which the aqueous composition is capable. When approximately 15% of AO has been added, the viscosity of the aqueous composition is approximately half of its original value. When a total of approximately 25% of AO has been added, the viscosity of the aqueous composition is approximately one-fourth of its original value. When all of A0 has been added, the viscosity of the aqueous composition is more than five times higher than its original value.

In the practice of specific embodiments of the present invention, it is contemplated that the practitioner will choose ingredients and amounts thereof that will facilitate the practice of that embodiment. For example, if it is desired that the composition of the present invention have certain specific characteristics, and if the choice of pH-sensitive dispersed polymer affects one or more of those certain specific characteristics, it is contemplated that the practitioner will choose one or more pH-sensitive dispersed polymer and will choose the amount of each pH-sensitive dispersed polymer in order to achieve the desired characteristics.

For example, a practitioner may wish to practice a viscosity-increase embodiment of the present invention in which, after the increase in viscosity, the composition has viscosity at 10⁻⁵ sec⁻¹ of 1,000 Pa*s or higher and has viscosity at 10 sec⁻¹ of 25 Pa*s or lower. It is contemplated that, by performing the viscosity tests disclosed herein, a practitioner could readily identify a pH-sensitive dispersed polymer, or a combination of two or more pH-sensitive dispersed polymers, and could identify amounts of such pH-sensitive dispersed polymer or polymers, that would allow the practitioner to create compositions that were such embodiments.

Similarly, if other embodiments with specific characteristics are desired, it is contemplated that, by using techniques well known in the art, a practitioner could select appropriate ingredients and amounts to create such embodiments.

For example, it is contemplated that, in some cases, some ingredients other than the pH-sensitive dispersed polymer or polymers may possibly affect the viscosity of the composition of the present invention. Among such cases, it is contemplated that, when a certain viscosity profile (i.e., a set of certain viscosity values at certain shear rates) is desired, a practitioner could readily choose one or more pH-sensitive dispersed polymers and the the amounts thereof to make a composition with the desired viscosity profile, using the viscosity tests disclosed herein and other techniques well known in the art.

The practice of the present invention can be useful for a variety of purposes. For example, using the present invention, a stable aqueous composition can be made that contains a relatively high concentration of at least one poorly water soluble compound; such a composition is known herein as a "concentrate" of that poorly water soluble compound or compounds. In some cases, such a concentrate is useful because it allows the poorly water soluble compound to be conveniently stored and/or transported (because it is concentrated) in a form that makes it easily added (because it is aqueous) to another aqueous formulation, such as, for example, a coating, a cosmetic formulation, a personal care formulation, an adhesive formulation, an agricultural formulation, a consumable formulation, any other useful formulation, or a combination or mixture thereof.

It is to be understood that for purposes of the present specification and claims that the range and ratio limits recited herein can be combined. For example, if ranges of 60 to 120 and 80 to 110 are recited for a particular parameter, it is understood that the ranges of 60 to 110 and 80 to 120 are also contemplated.

### EXAMPLES

In the following examples, these ingredients were used:
Agnique™ BL 4050 surfactant, from Cognis Brazil Ltda. (supplied as 97% pure solid)
Aculyn™ 33 Rheology Modifier, from Rohm and Haas Company (ASE, supplied at 28% solids in water)
Carbendazim (methyl benzimidazol-2-ylcarbamate) fungicide, from Rohm and Haas Company (supplied as 99% pure solid)
Diuron biocide, from Griffin-Dupont Brazil (supplied as 98% pure solid)
Kathon™ 893T biocide, from Rohm and Haas Company (supplied as 98% pure solid)
Rozone™ 2000 biocide, from Rohm and Haas Company (supplied at 20% solids in water)
AMP-95 liquid, 95% pure, 2-amino-2-methyl-1-propanol
Biospumex™ FDA-70 antifoam compound, from Cognis (supplied as dispersion, 17.5% solids in water)
Acusol™ 460NDP dispersant polymer from Rohm and Haas Company (supplied as solid powder, 95% pure)
Acusol™ 801S HASE Thickener, from Rohm and Haas Company, 20% solids in water.
Acusol™ 830 Rheology Modifier, from Rohm and Haas Company (ASE, supplied at 28% solids in water)

In the following Examples, Brookfield viscosity was measured with Brookfield LV, at 60 rpm, with #4 spindle. Viscosities at 10⁻⁵ sec⁻¹ and 10 sec⁻¹ were measured with a controlled stress rheometer with concentric cylinder geometry.

### Example 1: Aqueous Compositions

The following compositions are useful, for example, in making coatings formulations. The amounts shown for each ingredient are solids weight percent, based on the total weight of the aqueous composition. Each composition was made by first combining all ingredients except the AMP-95, which was added last. "b" means that water makes up the balance of the composition, to 100%.

| Ingredient | Composition #1-1 (%) | Composition #1-2 (%) | Composition #1-3 (%) |
|---|---|---|---|
| Agnique™ BL 4050 | 3.0 | 3.0 | 3.0 |
| Acusol™ 830 | 2.0 | 2.0 | 15 |
| Carbendazim | 15 | 7.5 | 15 |
| Diuron | | 20 | |
| KathonTM 893T | 2.7 | 2.7 | |
| Rozone™ 2000 | | | 2.0 |
| AMP-95 | 1.5 | 1.5 | 1.5 |
| water | b | b | b |

| | | | |
|---|---|---|---|
| Composition 1-1, composition 1-2, and composition 1-3 each exemplifies a viscosity-increase embodiment of the present invention. | | | |

### Example 2: Testing of Aqueous Compositions

The compositions listed in Example 1 were tested after storage at 45°C for 90 days. They were inspected visually for three phenomena: color change, syneresis, and particle settling. For each phenomenon, "yes" was recorded if that phenomenon was observed, and "none" was recorded if that phenomenon was not observed.
Also, each composition was analyzed by HPLC' (high performance liquid chromatography), to see if there was any decrease in the concentration of any biocide. If no decrease was observed, "none" was recorded.

| Test | Composition #1-1 | Composition #1-2 | Composition #1-3 |
|---|---|---|---|
| decrease in concentration of biocide | none | none | none |
| color change | none | none | none |
| syneresis | none | none | none |
| particle settling | none | none | none |

### Example 3: Aqueous compositions

The following compositions are useful, for example, in preserving personal care or cosmetic products. The aqueous compositions (abbreviated "comp.") were made using the following ingredients. The amounts are weight percent by solid weight based on the total weight of the composition. The sodium hydroxide was added in the form of a solution of sodium hydroxide in water (10% by weight of solid sodium hydroxide, based on the weight of the sodium hydroxide solution).

| Ingredient | Comp. #3A (%) | Comp. #3B (%) | Comp. #3C (%) | Comp. #3D (%) | Comp. #3E (%) |
|---|---|---|---|---|---|
| methyl isothiazolinone | 1.0 | 1.0 | 1.0 | 1.0 | 1.0 |
| methyl paraben | 20 | 20 | 20 | 20 | 20 |
| ethyl paraben | 10.7 | 10.7 | 10.7 | 10.7 | 10.7 |
| Aculyn™ 33 | 1.1 | 1.1 | 1.1 | 1.1 | 1.1 |
| sodium hydroxide | 1.2 | 1.2 | 1.2 | 1.2 | 1.2 |
| Biospumex™ FDA-70 | | | | 0.1 | |
| water | b | b | b | b | b |

These compositions were made by various methods, as follows:
Composition 3A: The Aculyn™ 33 was added to the water, and then the sodium hydroxide was added. The amount shown in the table above brought the pH to between 6.5 and 7. Then the methyl isothiazolinone was added, with stirring, followed by the powdered methyl paraben and powdered ethyl paraben, with stirring to distribute the powders.
Composition 3B: The Aculyn™ 33 was added to the water, but the sodium hydroxide was withheld until later. Then the methyl isothiazolinone was added to the water, followed by the powdered methyl paraben and powdered ethyl paraben, with stirring to distribute the powders. Then the sodium hydroxide was added.
Composition 3C: Made the same way as Composition 3B, except that the sodium hydroxide was added in two stages. First, 20 to 25% of the sodium was added to the composition, with stirring, and then the composition was allowed to stand, without stirring or other agitation, for 10 minutes. Then, the remainder of the sodium hydroxide was added, with stirring.
Composition 3D: Made the same way as Composition 3B, with the following changes: after addition of the parabens, 20 to 25% of the sodium hydroxide was added, with stirring, followed immediately by the Biospumex™ FDA-70, with stirring. Then the composition was allowed to stand, without stirring or other agitation, for 10 minutes. Then, the remainder of the sodium hydroxide was added, with stirring.
Composition 3E: The methyl isothiazolinone and the powdered parabens were added to the water, with stirring. Then the Aculyn™ 33 was added, with stirring. Next, 20 to 25% of the sodium was added to the composition, with stirring, and then the composition was allowed to stand, without stirring or other agitation, for 10 minutes. Then, the remainder of the sodium hydroxide was added, with stirring.

Composition 3B, composition 3C, composition 3D, and composition 3E each exemplifies a viscosity-increase embodiment of the present invention. Composition 3C, composition 3D, and composition 3E each exemplifies a viscosity dip embodiment of the present invention.

### Example 4: Testing of Aqueous Compositions.

The compositions of Example 3 were tested, using the viscosity measurements described herein above. Also, the density of each composition was measured by placing 50.0 grams of composition into a graduated cylinder, recording the volume, and calculating density as grams per milliliter. The results were as follows:

| | Composition # | | | | |
|---|---|---|---|---|---|
| Measurement | 3A | 3B | 3C | 3D | 3E |
| Density (g/ml) | 0.98 | 1.09 | 1.08 | 1.09 | 1.09 |
| Brookfield viscosity (mPa*s) | 5160 | 4900 | 4610 | 4930 | 5330 |
| Viscosity at 10⁻⁵ sec⁻¹ (Pa*s) | 391800 | 313600 | 242200 | 283300 | 279700 |
| Viscosity at 10 sec⁻¹ (mPa*s) | 5946 | 4947 | 5008 | 5384 | 5746 |

### Example 5: Aqueous Compositions

The following additional compositions are useful, for example, in making coatings. These aqueous compositions were made using the following ingredients. The amounts are weight percent by solid weight based on the total weight of the composition. The sodium hydroxide was added in the form of a solution of sodium hydroxide in water (10% by weight of solid sodium hydroxide, based on the weight of the sodium hydroxide solution).

| Ingredient | Comp. #5F (%) | Comp. #5G (%) |
|---|---|---|
| Carbendazim | 25.0 | 30.0 |
| Acusol™ 460NDP | 0.125 | |
| dioctyl sulphosuccinate | | 0.6 |
| Acusol™ 830 | | 1.0 |
| Acusol™ 801S | 0.6 | |
| sodium hydroxide | 0.7 | 1.3 |
| Biospumex™ FDA-70 | 1.5 | |
| water | b | b |

These compositions were made by various methods, as follows:
Composition 5F: The Acusol™ 460NDP was added to the water, followed by the Carbendazim, with stirring. Then the Acusol™ 801S was added, and the density was measured, showing 0.87 g/ml. Then the Biospumex™ FDA-70 was added, with stirring, and finally the sodium hydroxide was added.
Composition 5G: The dioctyl sulphosuccinate was dispersed in water, and the Carbendazim was added slowly with agitation. Then the Acusol 830 was added, and the resulting composition appeared fluid, with relatively low viscosity and no significant entrained air was visible. Then, the sodium hydroxide was added.

Composition 5F and composition 5G each exemplifies a viscosity-increase embodiment of the present invention.

### Example 6: Testing of Aqueous Compositions.

The compositions of Example 5 were tested, using the viscosity and density measurements described herein above. The results were as follows:

| | Composition # | |
|---|---|---|
| Measurement | 5F | 5G |
| Density (g/ml) | 1.04 | 1.08 |
| Brookfield viscosity (mPa*s) | 6430 | 3840 |
| Viscosity at 10⁻⁵ sec⁻¹ (Pa*s) | 298000 | 631400 |
| Viscosity at 10 sec⁻¹ (mPa*s) | 18950 | 5197 |

## Claims

1. An aqueous composition comprising:
(a) 10% to 80% at least one poorly water soluble biocide, by solids weight, based on the total weight of said aqueous composition,
(b) 0.1% to 30% at least one pH-sensitive dispersed polymer, by solids weight, based on the total weight of said aqueous composition, and
(c) 0% to 10% pH-insensitive polymer, by solids weight, based on the total weight of said aqueous composition,
wherein said pH-sensitive dispersed polymer is a polymer with weight-average molecular weight of 500,000 or greater, or is a crosslinked polymer, or is a mixture thereof.

2. The aqueous composition of claim 1, wherein said poorly water soluble biocide (a) is dispersed.

3. The aqueous composition of claim 1, wherein said pH-sensitive dispersed polymer (b) is selected from the group consisting of alkali soluble emulsions, alkali swellable emulsions, hydrophobically modified alkali soluble emulsions, hydrophobically modified alkali swellable emulsions, and mixtures thereof.

4. The aqueous composition of claim 1, wherein said pH-sensitive dispersed polymer is an alkali-soluble emulsion, an alkali-swellable emulsion, or a mixture or combination thereof.

5. A method of preparing an aqueous composition, comprising the step of preparing a mixture by mixing ingredients comprising
(a) 10% to 80% at least one poorly water soluble biocide, by solids weight, based on the total weight of said aqueous composition,
(b) 0.1% to 30% at least one pH-sensitive dispersed polymer, by solids weight, based on the total weight of said aqueous composition, and
wherein the Brookfield viscosity of said mixture is less than 1.0 Pa*s using a Brookfield LV viscometer at 60 rpm and spindle 1 or 2.

6. The method of claim 5, further comprising the step of adjusting the pH of said mixture to establish conditions under which the Brookfield viscosity of said aqueous composition is 2.0 Pa*s or more using a Brookfield LV viscometer at 60 rpm and spindle 4.

7. The method of claim 5, wherein said pH-sensitive dispersed polymer is an alkali-soluble emulsion, an alkali-swellable emulsion, or a mixture or combination thereof.

8. An aqueous composition made by the method of claim 7.

9. The method of claim 7, further comprising the step of preparing a formulation by mixing said mixture with at least one pH-insensitive latex polymer.

10. An aqueous composition made by the method of claim 9.

## Patentansprüche

1. Wässrige Zusammensetzung umfassend:
(a) 10 % bis 80 % mindestens eines schlecht wasserlöslichen Biozids, auf das Feststoffgewicht bezogen, auf der Basis des Gesamtgewichts der wässrigen Zusammensetzung,
(b) 0,1 % bis 30 % mindestens eines pH-empfindlichen dispergierten Polymers, auf das Feststoffgewicht bezogen, auf der Basis des Gesamtgewichts der wässrigen Zusammensetzung und
(c) 0 % bis 10 % pH-unempfindliches Polymer, auf das Feststoffgewicht bezogen, auf der Basis des Gesamtgewichts der wässrigen Zusammensetzung,
wobei das pH-empfindliche dispergierte Polymer ein Polymer mit einem gewichtsdurchschnittlichen Molekulargewicht von 500.000 oder mehr oder ein vernetztes Polymer oder eine Mischung davon ist.

2. Wässrige Zusammensetzung nach Anspruch 1, wobei das schlecht wasserlösliche Biozid (a) dispergiert ist.

3. Wässrige Zusammensetzung nach Anspruch 1, wobei das pH-empfindliche dispergierte Polymer (b) aus der Gruppe ausgewählt ist bestehend aus alkalilöslichen Emulsionen, alkaliquellfähigen Emulsionen, hydrophob modifizierten alkalilöslichen Emulsionen, hydrophob modifizierten alkaliquellfähigen Emulsionen und Mischungen davon.

4. Wässrige Zusammensetzung nach Anspruch 1, wobei das pH-empfindliche dispergierte Polymer eine alkalilösliche Emulsion, eine alkaliquellfähige Emulsion oder eine Mischung oder Kombination davon ist.

5. Verfahren für die Herstellung einer wässrigen Zusammensetzung, umfassend den Schritt des Herstellens einer Mischung durch Mischen von Bestandteilen umfassend
(a) 10 % bis 80 % mindestens eines schlecht wasserlöslichen Biozids, auf das Feststoffgewicht bezogen, auf der Basis des Gesamtgewichts der wässrigen Zusammensetzung,
(b) 0,1 % bis 30 % mindestens eines pH-empfindlichen dispergierten Polymers, auf das Feststoffgewicht bezogen, auf der Basis des Gesamtgewichts der wässrigen Zusammensetzung und
wobei die Brookfield-Viskosität der Mischung weniger als 1,0 Pa*s bei Verwendung eines Brookfield- LV-Viskosimeters bei 60 UpM und einer Spindel von 1 oder 2 beträgt.

6. Verfahren nach Anspruch 5, ferner den Schritt des Einstellen des pH-Werts der Mischung umfassend, um Bedingungen einzurichten, unter denen die Brookfield-Viskosität der wässrigen Zusammensetzung 2,0 Pa*s oder mehr bei Verwendung eines Brookfield-LV-Viskosimeters bei 60 UpM und einer Spindel von 4 beträgt.

7. Verfahren nach Anspruch 5, wobei das pH-empfindliche dispergierte Polymer eine alkalilösliche Emulsion, eine alkaliquellfähige Emulsion oder eine Mischung oder Kombination davon ist.

8. Wässrige Zusammensetzung, die durch das Verfahren nach Anspruch 7 hergestellt wird.

9. Verfahren nach Anspruch 7, ferner den Schritt des Herstellens einer Formulierung durch Mischen der Mischung mit mindestens einem pH-unempfindlichen Latexpolymer umfassend.

10. Wässrige Zusammensetzung, die durch das Verfahren nach Anspruch 9 hergestellt wird.

## Revendications

1. Composition aqueuse comprenant :
(a) de 10 % à 80 % d'au moins un biocide peu soluble à l'eau, en poids de solides, sur la base du poids total de ladite composition aqueuse ;
(b) de 0,1 % à 30 % d'au moins un polymère dispersé sensible en termes de pH, en poids de solides, sur la base du poids total de ladite composition aqueuse ; et
(c) de 0 % à 10 % d'un polymère insensible en termes de pH, en poids de solides, sur la base du poids total de ladite composition aqueuse ; dans laquelle :
ledit polymère dispersé sensible en termes de pH est un polymère qui présente un poids moléculaire moyen en poids de 500 000 ou plus, ou est un polymère réticulé, ou est un mélange afférent.

2. Composition aqueuse selon la revendication 1, dans laquelle ledit biocide peu soluble à l'eau (a) est dispersé.

3. Composition aqueuse selon la revendication 1, dans laquelle ledit polymère dispersé sensible en termes de pH (b) est sélectionné parmi le groupe qui est constitué par les émulsions alcalino-solubles, les émulsions susceptibles de gonfler en milieu alcalin, les émulsions alcalino-solubles modifiées hydrophobiquement, les émulsions susceptibles de gonfler en milieu alcalin modifiées hydrophobiquement et des mélanges afférents.

4. Composition aqueuse selon la revendication 1, dans laquelle ledit polymère dispersé sensible en termes de pH est une émulsion alcalino-soluble, une émulsion susceptible de gonfler en milieu alcalin ou un mélange afférent ou une combinaison afférente.

5. Procédé de préparation d'une composition aqueuse, comprenant l'étape de préparation d'un mélange en mélangeant des ingrédients comprenant :
(a) de 10 % à 80 % d'au moins un biocide peu soluble à l'eau, en poids de solides, sur la base du poids total de ladite composition aqueuse ; et
(b) de 0,1 % à 30 % d'au moins un polymère dispersé sensible en termes de pH, en poids de solides, sur la base du poids total de ladite composition aqueuse ; et dans lequel :
la viscosité de Brookfield dudit mélange est inférieure à 1,0 Pa*s en utilisant un viscosimètre LV de Brookfield à 60 tours par minute/tpm et un arbre 1 ou 2.

6. Procédé selon la revendication 5, comprenant en outre l'étape de réglage du pH dudit mélange de manière à établir des conditions sous lesquelles la viscosité de Brookfield de ladite composition aqueuse est de 2,0 Pa*s ou plus en utilisant un viscosimètre LV de Brookfield à 60 tours par minute/tpm et un arbre 4.

7. Procédé selon la revendication 5, dans lequel ledit polymère dispersé sensible au pH est une émulsion alcalino-soluble, une émulsion susceptible de gonfler en milieu alcalin ou un mélange afférent ou une combinaison afférente.

8. Composition aqueuse obtenue au moyen du procédé selon la revendication 7.

9. Procédé selon la revendication 7, comprenant en outre l'étape de préparation d'une formulation en mélangeant ledit mélange avec au moins un polymère latex insensible en termes de pH.

10. Composition aqueuse obtenue au moyen du procédé selon la revendication 9.
